# EUROPÄISCHE PATENTSCHRIFT

(11) **EP 1 867 226 B1**
(45) Veröffentlichungstag und Bekanntmachung des Hinweises auf die Patenterteilung: **02.02.2011**
(21) Anmeldenummer: 07011344.4
(22) Anmeldetag: 09.06.2007
(51) Int. Cl.: A01D 34/135

(54) **Schneidwerk für Schnittgut**
Cutting unit for crops
Barre de coupe pour produit à découper

(30) Priorität: 12.06.2006 DE 102006027137
(43) Veröffentlichungstag der Anmeldung: 19.12.2007
(73) Patentinhaber: ESM ENNEPETALER SCHNEID- UND MÄHTECHNIK GMBH & CO. KG, D-58256 Ennepetal (DE)
(72) Erfinder: Schlasse, Manfred, 58089 Hagen (DE)
(74) Vertreter: Rehberg Hüppe + Partner

(56) Entgegenhaltungen:
- DE-A1- 2 828 766
- DE-A1- 2 922 579
- DE-A1- 3 414 615
- DE-A1- 19 507 265

## Beschreibung

### TECHNISCHES GEBIET DER ERFINDUNG

Die Erfindung betrifft ein Schneidwerk für Schnittgut mit den im Oberbegriff des Anspruchs 1 genannten Merkmalen. Unter einem Schneidwerk wird beispielsweise ein Mähwerk verstanden, mit dem Halmgut, insbesondere Getreide, aber auch Gras und ähnliche Futtermittel, abgeschnitten werden kann. Es kann sich aber auch um eine Schneidvorrichtung handeln, mit der bereits abgeschnittenes Schnittgut zerschnitten, also insbesondere zerkleinert, wird. Typische Beispiele für solche Schneidwerke sind Doppelmesser-Mähschneidwerke oder Einmesser-Mähschneidwerke, die hin- und hergehend angetriebene Messerklingen aufweisen, die auf einer Schiene oder einem Messerrücken angeordnet sind. Die Messerklingen müssen bei ihrer hin- und hergehenden Bewegung geführt werden. Dies geschieht mittels Führungsarmen, die eine hin- und hergehende Schwenkbewegung ausführen. Die Führungsarme haben die weitere Aufgabe, die Messerklingen gegenüber den damit zusammenwirkenden Gegenelementen anzupressen bzw. an diese anzudrücken. Bei den Gegenelementen kann es sich z. B. bei Doppelmesser-Mähschneidwerken ebenfalls um hin- und hergehend angetriebene Messerklingen handeln. Die Gegenelemente können aber auch stillstehend angeordnete Messerklingen, Finger oder sonstige Stützelemente sein.

### STAND DER TECHNIK

Ein solches Schneidwerk für Schnittgut mit den im Oberbegriff des Anspruchs 1 angegebenen Merkmalen ist aus der DE 195 07 265 A1 bekannt. Das Schneidwerk besitzt zwei als Messerrücken bezeichnete Schienen, die mit Messerklingen besetzt sind. Die hin- und hergehend angetriebene Schiene wird über eine Anzahl Führungsarme geführt, die in entsprechender Anzahl über die Arbeitsbreite des Schneidwerks verteilt vorgesehen sind. Jeder Führungsarm ist an seinem in Arbeitsrichtung hinteren Ende schwenkbar gelagert. Jeder Führungsarm besitzt auch an seinem vorderen, in Arbeitsrichtung weisenden Ende je ein Schwenklager mit etwa vertikal angeordneter Achse. Bestandteil jedes Schwenklagers ist ein auf eine Messerklinge aufgenieteter Mitnehmerzapfen, der eine Durchbrechung der Messerklinge durchsetzt und durch eine Nietung kraftschlüssig gegen Verdrehen gesichert ist. Als weiteres Element weist jedes Schwenklager einen Kopf oder eine Mitnehmerhülse auf, mit der es über den Mitnehmerzapfen greift. Bei der schwingenden Hin- und Herbewegung des Führungsarms findet eine Relativbewegung zwischen Mitnehmerzapfen und Mitnehmerhülse statt, die zu einem starken Verschleiß dieser Teile führt. Es ist daher erforderlich, die verschlissenen Teile des Schwenklagers auszutauschen. Durch den eintretenden Verschleiß ändert sich auch die Anpresskraft, mit der die hin- und hergehend angetriebenen Messerklingen über die Führungsarme an den betreffenden Gegenelementen angepresst werden. Hieraus ergibt sich die Notwendigkeit einer entsprechenden mehrfachen Nachjustierung und insoweit ein erhöhter Wartungsaufwand über die Lebensdauer bzw. Einsatzzeit der Elemente des Schwenklagers.

Nach Erkenntnissen der Anmelderin beträgt die Standzeit der Elemente der Schwenklager nur etwa 40-50 % der Standzeit der Messerklingen eines solchen Schneidwerks. Der zwischen dem Mitnehmerzapfen und der Mitnehmerhülse auftretende Verschleiß lässt sich in einen Radialverschleiß und in einen Axialverschleiß unterteilen. Dies ist auch dann der Fall, wenn der Mitnehmerzapfen mit einer Kegelspitze versehen ist, die einen spitzen Winkel von ca. 120° aufweist, wobei diese Gestaltung dem Winkel der Bohrspitze der Bohrung in dem Kopf des Führungsarms oder einer entsprechenden Mitnehmerhülse entsprechen kann. Der relativ große Radial- und Axialverschleiß führt zu einem frühzeitigen Wechsel dieser Elemente des Schwenklagers, was einerseits zeitaufwändig und andererseits kostspielig ist. Hinzu kommt die Notwendigkeit eines häufigen Nachjustierens der Anpresskraft, was insbesondere bei Großgeräten sehr zeitaufwändig ist. Unabhängig davon, ob die Köpfe der Führungsarme aufgebohrt sind, um über die Mitnehmerzapfen zu greifen, oder ob separate Mitnehmerhülsen jeweils mit dem vorderen Ende des Führungsarms vernietet sind, ergeben sich Winkelfehler zwischen den Achsen der Mitnehmerzapfen und der Mitnehmerhülsen. Diese Winkelfehler können in der Größenordnung von ca. 3°-5° liegen. Es erscheint denkbar, der Gefahr von Verkantung infolge Winkelfehler dadurch entgegenzuwirken, dass der innere Durchmesser der Mitnehmerhülse mit einem entsprechend größer als der Außendurchmesser des Mitnehmerzapfens ausgeführten Durchmesser gestaltet wird. Eine solche Maßnahme kann aber verschleißerhöhend wirken. Überdies besteht dabei die Gefahr, dass sich die Vernietung des Mitnehmerzapfens an der Messerklinge löst.

Beim Austausch einer Messerklinge mit aufgenietetem Mitnehmerzapfen und der auf dem Führungsarm angeordneten Mitnehmerhülse entsteht das Problem, dass die den Mitnehmerzapfen tragende Messerklinge eine größere Dicke aufweist als die inzwischen schon verschlissenen übrigen Messerklingen, die nicht ausgetauscht werden. Nach Beobachtungen der Anmelderin können die Dickenunterschiede zwischen neu aufgenieteten Messerklingen und nicht ausgetauschten verschlissenen Messerklingen an einer Schiene bis zu 0,7 mm betragen. Diese Unterschiede führen dazu, dass die verbliebenen Messerklingen nunmehr nicht mehr auf ihren Gegenelementen aufliegen, sondern unter Spaltbildung mit diesen zusammenarbeiten. Dies führt nicht nur zu einer starken Verschlechterung der Schnittqualität, sondern verursacht weitere Verschleißprobleme, insbesondere an den mit den Messerklingen zusammenarbeitenden Gegenelementen. Durch einen relativ großen Schneidspalt wird Schnittgut in den Spalt eingezogen. Dabei tritt ein Schleifeffekt und damit eine Abrundung an den Kanten der Gegenelemente und/oder der Messerklingen auf. Dies kann zu einer weiteren Verschlechterung der Schnittqualität und zu einem vorzeitigen Ausfall der Gegenelemente des Schneidwerks führen, verbunden mit den damit sich ergebenden Folgeproblemen.

Um dem Problem des auftretenden Verschleißes an Elementen des Schwenklagers des Führungsarms an seinem vorderen, der Messerklinge zugekehrten Ende entgegenzuwirken, ist es aus der DE 29 22 579 A1 bekannt, das Schwenklager unter Verwendung eines Gummi-Metallblocks zu realisieren, der in den Führungsarm eingesetzt oder auf die Messerklinge aufgesetzt ist. Der Gummi-Metallblock weist eine Innenbuchse und eine Außenbuchse auf, die mit dem zwischengeschalteten Gummiteil insbesondere durch Vulkanisieren verbunden sind. Das andere Teil des Schwenklagers ist auch hier einstückig ausgebildet und besteht aus einem Mitnehmerzapfen in Form eines abgestumpft-pyramidenförmigen Kupplungsstiftes, der die Messerklinge durchsetzt oder durch Tiefziehen von dem Material der Messerklinge gebildet ist. Die Drehbewegung wird damit im Gummiteil des Gummi-Metallblocks aufgenommen. Jeglicher Verschleiß durch gleitende Reibung oder verschmutzte Wälzlagerungen wird somit ausgeschlossen. Die Verwendung der Gummi-Metallblöcke zielt in eine andere Entwicklungsrichtung und lässt die einstückige Ausbildung des Mitnehmerzapfens unberührt. Diese Gummi-Metallblöcke lassen bei vertretbarer Lebensdauer nur begrenzte Schwenkwinkel zu, die für manche Anwendungsfälle nicht ausreichend sind. Die begrenzte Lebensdauer erfordert auch hier einen Austausch der Gummi-Metallblöcke, was durch eine axiale Schnellkupplungs-Steckverbindung ermöglicht wird. Ein solcher Austausch erscheint aber infolge der durchgehenden Verbindung noch schwieriger und wartungsaufwändiger ist als bei Elementen des Schwenklagers, zwischen denen eine Relativbewegung stattfindet. Ein weiterer wesentlicher Nachteil dieser Gummi-Metallblöcke ist in ihrem relativ großen erforderlichen Durchmesser und der damit verbundenen voluminösen Bauweise zu sehen, was beim Schneiden von Gräsern zum Abweisen des Schnittguts beim Eintritt in das Schneidwerk führen kann, so dass diese Entwicklungsrichtung für normale Anwendungen kaum brauchbar erscheint. Für kleine Geschwindigkeiten und kleine Schwenkwinkel erscheinen Schwenklager unter Verwendung von Gummi-Metallblöcken dagegen einsatzfähig.

### AUFGABE DER ERFINDUNG

Der Erfindung liegt die Aufgabe zugrunde, das Schneidwerk der eingangs beschriebenen Art hinsichtlich der Schwenklager so zu verbessern, dass für die Elemente der Schwenklager eine Lebensdauer resultiert, die insbesondere wenigstens in etwa der Lebensdauer der Messerklingen des Schneidwerks entspricht. Dies zielt darauf ab, das zeitaufwändige und kostspielige Auswechseln der Elemente der Schwenklager während der Lebensdauer des Schneidwerks zu vermeiden.

### LÖSUNG

Die Aufgabe der Erfindung wird erfindungsgemäß mit den Merkmalen des unabhängigen Patentanspruchs 1 gelöst.

Vorteilhafte Ausgestaltungen sind Gegenstand der Unteransprüche.

### BESCHREIBUNG DER ERFINDUNG

Der bisher einstückige Mitnehmerzapfen wird nunmehr in mindestens zwei wesentliche Elemente unterteilt, nämlich einen Haltebolzen einerseits und eine Lagerkappe andererseits. Der Haltebolzen durchdringt die Messerklinge, erstreckt sich also durch eine Durchbrechung der Messerklinge hindurch. Er dient zur drehfesten Befestigung beider genannter Elemente an der Messerklinge, die zusammen den Mitnehmerzapfen bilden. Der Haltebolzen wird auf einem Großteil seiner axialen Länge von einer Lagerkappe umschlossen. Haltebolzen und Lagerkappe sind drehfest miteinander und mit der Messerklinge verbunden, so dass die Lagerkappe auch drehfest gegenüber der Messerklinge gehalten ist. Die Mitnehmerhülse an dem Führungsarm kommt nur in direkten Kontakt mit der Lagerkappe, die zu diesem Zweck in der Regel mindestens zwei Kontaktflächen aufweist.

Die Erfindung setzt sich in Gegensatz zu der Entwicklungsrichtung im Stand der Technik, die durch die Verwendung von Gummi-Metallblöcken gekennzeichnet ist. Bei der Erfindung wird die Relativbewegung zwischen der Lagerkappe und der Mitnehmerhülse zugelassen, jedoch ergibt sich infolge der Unterteilung des Mitnehmerzapfens in den Haltebolzen und die Lagerkappe die Möglichkeit, die beiden genannten Teilelemente aus unterschiedlichen Werkstoffen besonders beanspruchungsgerecht auszuführen. Dabei ist es von Vorteil, wenn der Haltebolzen aus einem gut nietbaren Werkstoff besteht. Solche gut nietbaren Werkstoffe sind in der Regel wenig verschleißfest, besitzen eine geringe Härte und lassen sich durch Druckanwendung, wie es einem Nietvorgang entspricht, gut verformen. Andererseits besteht mit der Erfindung die Möglichkeit, die Lagerkappe aus einem voll durchhärtbaren, verschleißarmen Werkstoff auszubilden, der durch entsprechende Härtebehandlung eine hohe Härte von beispielsweise ca. 62 HRc bekommen und mit dieser Härte eingesetzt werden kann. Hierdurch wird der Verschleiß an der radialen und der axialen Kontaktstelle zwischen der Lagerkappe und dem Mitnehmerzapfen deutlich verringert. Es ergibt sich damit eine Lebensdauer für die Elemente des Schwenklagers, die der Lebensdauer der Messerklingen entsprechen, so dass vorteilhaft ein Austausch der Elemente des Schwenklagers vermieden wird. Damit entfallen teure und aufwändige Servicearbeiten, die bisher durch den Austausch von Elementen des Schwenklagers bedingt waren.

Mit der Erfindung wird noch ein weiterer wesentlicher Vorteil erzielt. Durch die Vermeidung eines Austauschs von Elementen des Schwenklagers über die normale Lebensdauer der Messerklingen wird eine Situation vermieden, bei der neue Messerklingen mit nicht alten, bereits teilverschlissenen Messerklingen im Verbund arbeiten müssen. Es wird die eingangs beschriebene Spaltbildung vermieden. Damit wird auch der Schleifeffekt an den Gegenelementen im Spaltbereich beseitigt. Es entsteht ein sauberes Schnittbild über die gesamte Lebensdauer der Messerklingen bzw. des Schneidwerks. Auch Folgeschäden an feststehenden Fingern oder ähnlichen Gegenelementen kommen in Fortfall.

Ein weiterer Vorteil des neuen Schwenklagers ergibt sich aus dem Umstand, dass die Baugröße gegenüber Schwenklagern mit einteiligem Mitnehmerzapfen nur geringfügig vergrößert wird. Jedenfalls tritt beim Einsatz des neuen Schneidwerks keine Verstopfungsgefahr durch das Mähgut auf. Der Durchmesser der Elemente des Schwenklagers ist immer noch erheblich kleiner als der Durchmesser von Schwenklagern, bei denen Gummi-Metallblöcke eingesetzt werden. Da über die gesamte Lebensdauer der Messerklingen an allen Stellen eine Spaltbildung vermieden und eine zumindest über die Flächen konstante Anlage zwischen den Messerklingen und den Gegenelementen erreicht wird, reduzieren sich Wartungs- und Nachjustierarbeiten, insbesondere hinsichtlich der Nachstellung des Anpressdrucks, erheblich.

Die Lagerkappe kann und wird nunmehr aus einem voll durchhärtbaren, verschleißarmen Werkstoff bestehen, beispielsweise aus einem mit Cr oder Mn o. ä. legierten Werkzeugstahl. Bisher war es nicht möglich, solche Werkstoffe einzusetzen, weil sich solche Werkstoffe nicht vernieten lassen. Die Verwendung eines voll durchhärtbaren, verschleißarmen Werkstoffs bietet im Gegensatz zum Stand der Technik nunmehr die Möglichkeit, dass die Oberflächenhärte der Kontaktfläche des Schwenklagers über die Lebensdauer konstant bleibt, sich also mit zunehmendem Verschleiß nicht mehr verringert.

Der Haltebolzen kann und wird nunmehr aus einem gut nietbaren Werkstoff bestehen, also ein Werkstoff, der in der Regel geringe Härte besitzt und verschleißanfällig ist, was aber keine Rolle spielt, da der Haltebolzen keiner Relativbewegung unterliegt und damit am Verschleiß nicht teilnimmt. Im Gegenteil, der Werkstoff des Haltebolzens kann auf die besonderen Bedürfnisse durch relativ niedrige Härte sinnvoll abgestimmt werden.

Es ist nicht unbedingt erforderlich, jedoch vorteilhaft, wenn die Mitnehmerhülse an dem Führungsarm lösbar befestigt ist. Die lösbare Befestigung bietet den Vorteil eines leichten Auswechselns der Mitnehmerhülse, sollte sich dies durch besondere Beanspruchungen als notwendig erweisen. Die lösbare Befestigung kann durch eine Schraubverbindung, eine Nietverbindung oder dergleichen realisiert werden.

Die Lagerkappe ist so gestaltet, dass sie sowohl eine mantelförmige als auch eine oberseitige Kontaktfläche zu der Mitnehmerhülse aufweist. Die Mitnehmerhülse ist bodenseitig geschlossen und bildet damit gleichsam eine Mitnehmerkappe. Ihre Gestalt ist ähnlich der Lagerkappe, nur entsprechend größer. An der Lagerkappe ist die mantelförmige Kontaktfläche ausgebildet, also eine im Wesentlichen zylindermantelförmige erste Kontaktfläche, die mit der entsprechenden Gegenfläche an der Mitnehmerhülse in Kontakt kommt. Die oberseitige Kontaktfläche ist der oberen Stirnseite der Lagerkappe zuzuordnen und wird zumindest von einem Teil dieser Fläche gebildet. An der mantelförmigen Kontaktfläche tritt Verschleiß in radialer Richtung auf. An der oberseitigen Kontaktfläche tritt Verschleiß in axialer Richtung auf. Entsprechendes gilt für die Kontaktflächen an der Mitnehmerhülse. Die kraftmäßige Beanspruchung beider Kontaktflächen wird etwa als gleichgroß angesehen, wobei bei der flächenmäßigen Gestaltung darauf zu achten ist, dass ein radial auftretender Verschleiß die Anpresskraft nicht beeinträchtigt, während dies bei einem axialen Verschleiß der Fall ist. In diesem Zusammenhang ist es besonders vorteilhaft, wenn die mantelförmige und/oder die oberseitige Kontaktfläche der Lagerkappe ballig ausgebildet sind. Hierdurch findet einerseits eine Anpassung an Herstellungs- und Einbautoleranzen statt. Weiterhin werden die negativen Folgen von Winkelfehlern beseitigt. Bei erhöhter Beanspruchung, also z. B. bei sehr großen Schnittgeschwindigkeiten, wirkt sich eine progressive Vergrößerung der anliegenden Kontaktfläche vorteilhaft aus. Die oberseitige Kontaktfläche der Lagerkappe und die entsprechende Stirnfläche der Mitnehmerhülse können - abgesehen von der Balligkeit - im Wesentlichen senkrecht zu der Achse des Schwenklagers angeordnet sein. Mit dieser Ausbildung wird eine geringere Flächenpressung erreicht, wodurch der Verschleiß an dieser Stelle deutlich reduziert ist.

Besonders vorteilhaft ist es, wenn die Lagerkappe an ihrem der Messerklinge zugekehrten Ende einen radial vorstehenden ringförmigen Bund aufweist. Dieser Bund erfüllt Mehrfachfunktion. Er bringt einerseits eine stabile Abstützung der Lagerkappe auf der Messerklinge. Er ermöglicht bzw. verbessert die Verbindungsmöglichkeiten zwischen dem Haltebolzen und der Lagerkappe. Insbesondere verstärkt dieser Bund die Lagerkappe gegenüber einwirkenden Kräften, die dann aufgenommen werden müssen, wenn beispielsweise der Haltebolzen beim Vernieten an der Messerklinge in eine aufgesetzte Lagerkappe hinein verpresst wird. Ein solches Fließpressen stellt eine besonders einfache und vorteilhafte Verbindungstechnik zwischen Haltebolzen und Lagerkappe dar, die in einer verdrehsicheren Befestigung aneinander endet. Diese Verbindung wird gleichzeitig mit dem Erreichen der Vernietung an dem entsprechenden Durchbruch der Messerklinge erreicht. Der Bund verhindert ein Aufplatzen der Lagerkappe während des Nietvorgangs. Er lässt es trotzdem zu, dass die z. B. ballig ausgebildete mantelförmige Kontaktfläche auf vergleichsweise kleinerem Durchmesser angeordnet wird, um insgesamt das Bauvolumen des Schwenklagers vorteilhaft gering zu halten.

Der ringförmige Bund kann aber auch noch zur Erbringung weiterer Funktionen herangezogen bzw. genutzt werden. Der ringförmige Bund weist auf seiner der Mitnehmerhülse zugekehrten Seite eine zusätzliche Oberfläche auf, die geeignet ist, entsprechende Axialkräfte aufzunehmen. Dabei kann die Gestaltung von vornherein so sein, dass auch diese zusätzliche Fläche an dem Bund für die Axiallagerung und die Aufnahme der Anpresskräfte genutzt wird. Auf diese Weise lässt sich die oberseitige Kontaktfläche in ihrer Fläche vergrößern. Die mögliche Vergrößerung ist bedeutsam, da der Flächenzuwachs auf relativ großem Radius erfolgt. Andererseits kann die Gestaltung aber auch so abgestimmt werden, dass für die Axiallagerung zunächst nur die oberseitige Stirnfläche der Lagerkappe genutzt wird. Erst wenn ein zugelassener Verschleiß an dieser Fläche eintritt, kann eine Anlage zwischen der zweiten Kontaktfläche in axialer Richtung an dem ringförmigen Bund und der Mitnehmerhülse in Wirkkontakt treten. Damit wird der fortschreitende Verschleiß sprunghaft reduziert. Es ist auch möglich, die axiale Dicke des Bunds als ein Maß bzw. eine Anzeige dafür zu nutzen, wie weit der Verschleiß in axialer Richtung fortgeschritten ist.

Die Messerklinge kann an der Durchdringungsstelle des Haltebolzens eine zumindest teilweise unrund gestaltete Fläche aufweisen, die in Verbindung mit dem eingenieteten Haltebolzen eine formschlüssige drehfeste Verbindung zwischen Haltebolzen und Messerklinge ergibt. Die Messerklingen werden vorteilhaft mit einer Dicke ausgeführt, die aus Gründen der Kleinheit der bewegten Massen nur so dick bzw. dünn wie notwendig gestaltet ist. Eine dünne Messerklinge besitzt damit aber nur eine relativ kleine Fläche, an der sie in Kontakt zu dem eingenieteten Haltebolzen steht. An dieser Kontaktstelle muss die drehfeste Verbindung erreicht und über die Lebensdauer aufrechterhalten werden. Hier hilft eine unrund gestaltete Fläche erheblich, die es ermöglicht, neben dem Kraftschluss einen Formschluss zu nutzen.

Für die lösbare Verbindung der Mitnehmerhülse an dem Führungsarm kommt, wie beschrieben, eine Nietverbindung, aber auch eine Schraubverbindung, in Frage. Bei beiden Verbindungsarten, insbesondere bei der Schraubverbindung, ist der zusätzliche Einsatz einer Distanzscheibe vorteilhaft. Dabei ist die Schraubverbindung an der Mitnehmerhülse in Abstimmung auf die Dicke des Führungsarms so zu gestalten, dass die Distanzscheibe aufgenommen werden kann. Bei einem neuen Schneidwerk wird die Distanzscheibe auf der der Messerklinge abgekehrten Seite des Führungsarms eingesetzt, während nach entsprechender Lebensdauer und fortgeschrittenem Verschleiß die Distanzscheibe auf der anderen Seite des Führungsarms, die der Messerklinge zugekehrt ist, zwischengeschaltet werden kann, um auch zu diesem Zeitpunkt einen erforderlichen Bereich zur Verfügung zu stellen, in welchem die Nachjustierung der Anpresskraft erfolgen kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Detaildarstellung in Form eines Vertikalschnitts durch eine Messerklinge mit dem daran angreifenden Führungsarm an einem Schneidwerk.
- **Fig. 2**: zeigt die einzelnen Elemente Haltebolzen, Lagerkappe und Messerklinge vor der Montage.
- **Fig. 3**: zeigt eine weitere Ausführungsform eines Schwenklagers an der beschriebenen Stelle des Schneidwerks.
- **Fig. 4**: zeigt eine weitere Ausführungsform des Schwenklagers mit seinen Einzelteilen sowie verschiedenen Besonderheiten.
- **Fig. 5**: zeigt eine Ansicht auf eine Messerklinge von unten.
- **Fig. 6**: zeigt einen Schnitt gemäß der Linie VI-VI in Fig. 5.
- **Fig. 7**: zeigt einen Vertikalschnitt durch eine formschlüssige Nietverbindung zwischen Haltebolzen und Messerklinge.
- **Fig. 8**: zeigt einen Schnitt gemäß der Linie VIII-VIII in Fig. 7.
- **Fig. 9**: zeigt eine weitere Ausführungsform eines Schwenklagers an der beschriebenen Stelle des Schneidwerks.

### FIGURENBESCHREIBUNG

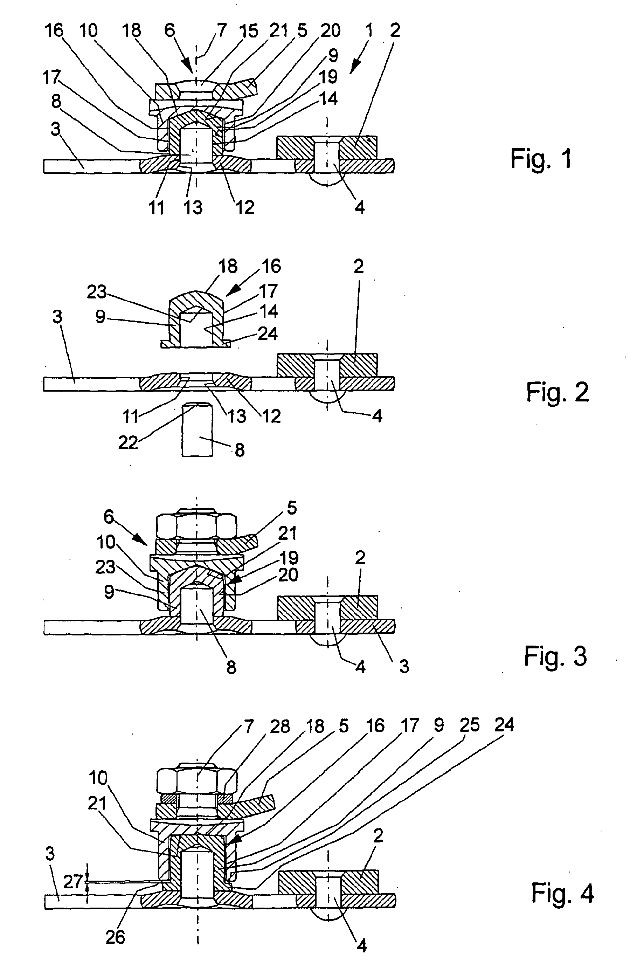

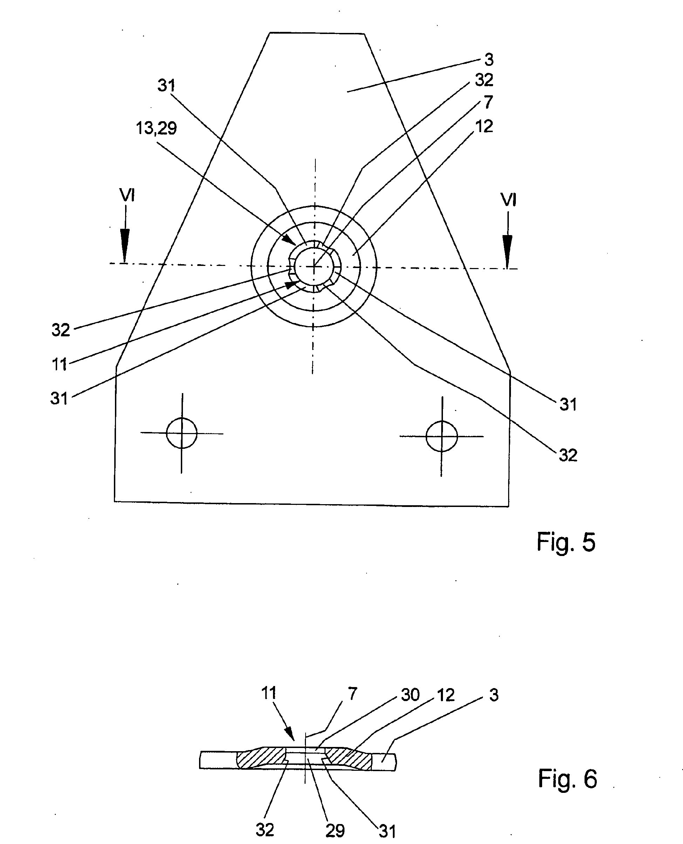

**Fig. 1** zeigt die für das Verständnis der Erfindung wesentlichen Teile bzw. Elemente. Wesentliche Teile eines Schneidwerks 1, wie es beispielsweise in den Fig. 5 und 1 der DE 195 07 265 A1 dargestellt ist, sind eine hin- und hergehend angetriebene Schiene 2, die zuweilen auch als Messerrücken bezeichnet wird. Mit dem Messerrücken bzw. der Schiene 2 sind Messerklingen 3 durch Niete 4 verbunden. Es versteht sich, dass über die Arbeitsbreite des Schneidwerks eine Vielzahl von Messerklingen 3 nebeneinander an der Schiene 2 angeordnet sind. Ebenfalls sind an dem Schneidwerk 1 über die Arbeitsbreite in entsprechenden Abständen verteilt Führungsarme 5 vorgesehen, von denen in Fig. 1 der vorderste Teil eines solchen Führungsarms 5, also das vordere, in Arbeitsrichtung weisende Ende des Führungsarms 5 dargestellt ist. Der in Fig. 1 gezeigte Vertikalschnitt geht durch eine solche Messerklinge 3, an der der betreffende Führungsarm 5 unter Ausbildung eines Schwenklagers 6 mit zumindest etwa vertikaler Achse 7 angreift.

Es ist hier nur die obere Schiene 2 dargestellt, die die Messerklingen 3 trägt, die hin- und hergehend angetrieben werden. Bei einem Doppelmesser-Schneidwerk ist in etwa spiegelbildlicher Anordnung eine zweite Schiene (nicht dargestellt) vorgesehen, die ebenfalls Messerklingen trägt, wobei diese Messerklingen die Gegenelemente zu den dargestellten Messerklingen 3 abgeben, wie dies im Stand der Technik bekannt ist. Die Gegenelemente müssen aber nicht aus Messerklingen bestehen, sondern können auch fingerartig ausgebildet sein. Sie stellen mindestens Gegenhalteelemente für das Schnittgut dar, damit durch die hin- und hergehende Bewegung der Messerklingen 3 ein ordnungsgemäßer Schnitt erzielt wird.

Das Schwenklager 6 weist im Wesentlichen drei Elemente auf, nämlich einen Haltebolzen 8, eine Lagerkappe 9 und eine Mitnehmerhülse 10. Der Haltebolzen 8 und die Lagerkappe 9 bilden zusammen den im Stand der Technik bekannten Mitnehmerzapfen 8, 9 und können daher funktionsmäßig mit diesem verglichen werden. Haltebolzen 8 und Lagerkappe 9 sind drehfest mit der betreffenden Messerklinge 3 verbunden. Auch diese Verbindung ist hier als Vernietung ausgeführt. Der Haltebolzen 8 durchsetzt eine Durchbrechung 11 in der Messerklinge 3, die vorzugsweise in einem hochgeprägten Bereich 12 der Messerklinge 3 angeordnet ist. Die Durchbrechung wird in aller Regel eine konisch angesenkte Fläche 13 aufweisen. Der Haltebolzen 8 greift andererseits in eine Bohrung 14 in der Lagerkappe 9 ein. Er ist mit der Innenwandung der Lagerkappe 9 drehfest verbunden. Die Verbindung erfolgt während des Nietvorgangs durch Fließpressen des Materials des Haltebolzens 8.

Andererseits gehört zu dem Schwenklager 6 die Mitnehmerhülse 10, die mit dem Führungsarm 5 verbunden ist. Die lösbare Verbindung wird hier durch einen Niet 15 erreicht. Es ist erkennbar, dass die Mitnehmerhülse 10 die Lagerkappe 9 übergreift.

Die Lagerkappe 9 weist auf ihrer äußeren Oberfläche eine Kontaktfläche 16 zu der Mitnehmerhülse 10 auf. Die Kontaktfläche 16 der Lagerkappe 9 kann in eine mantelförmige Oberfläche 17 und eine stirnseitige kegelstumpfförmige Oberfläche 18 unterteilt werden. Die mantelförmige Oberfläche 17 ist hier zylindrisch ausgebildet. Die stirnseitige Oberfläche 18 ist hier kegelförmig ausgebildet.

Die Mitnehmerhülse 10 weist auf ihrer inneren Oberfläche eine Kontaktfläche 19 zu der Lagerkappe 9 auf. Die Kontaktfläche 19 der Mitnehmerhülse 10 kann in eine mantelförmige Oberfläche 20 und eine grundseitige kegelförmige Oberfläche 21 unterteilt werden. Die mantelförmige Oberfläche 20 ist hier zylindrisch ausgebildet. Die grundseitige Oberfläche 21 ist hier kegelförmig ausgebildet. Als Material für die Herstellung der Mitnehmerhülse kann C-armer Stahl verwendet werden. Die Mitnehmerhülse wird zunächst hinsichtlich der Bohrung 14 und damit der Oberflächen 20 und 21 spanend fertig bearbeitet. Dann folgt ein Aufkohlungsvorgang. Anschließend wird die Mitnehmerhülse im Nietbereich bzw. im Schraubbereich spanend so abgearbeitet, dass die aufgekohlte Schicht verschwindet. Es schließt sich ein Härtevorgang an, so dass die Kontaktfläche 19 eine entsprechende Härte bekommt, aber der Niet- oder Schraubbereich weich und damit z. B. nietbar bleibt.

Zwischen den mantelförmigen Oberflächen 17 und 20 ist entsprechendes Spiel (Fig. 1) vorgesehen, um einerseits die Bewegung zu ermöglichen und Herstellungs- und Montagefehler auszugleichen. Bei der hin- und hergehenden Verschwenkbewegung des Führungsarms 5 findet eine entsprechende Relativbewegung zwischen der mantelförmigen Oberfläche 17 der Lagerkappe 9 und der mantelförmigen Oberfläche 20 der Mitnehmerhülse 10 statt. Entsprechendes gilt für die stirnseitige Oberfläche 18 der Lagerkappe 9 und der grundseitigen Oberfläche 21 der Mitnehmerhülse 10. Zum Ausgleich der auftretenden Toleranzen und Winkelfehler, bedingt durch Herstellung und/oder Montage, zwischen den Achsen der Lagerkappe 9 einerseits und der Mitnehmerhülse 10 andererseits ist das Spiel zwischen den Oberflächen 17 und 20, wie in Fig. 1 ersichtlich, vorgesehen. An diesen beiden Oberflächen 17 und 20 findet radiale Beanspruchung und damit radialer Verschleiß statt. An den beiden Oberflächen 18 und 21 findet axialer Verschleiß statt. In dieser Richtung wird auch die Anpresskraft auf die Messerklingen 3 übertragen, die durch eine entsprechende Einstellung der Führungsarme 5 bereitgestellt wird. Beispielsweise können die Führungsarme 5 aus Federstahl bestehen und über eine nicht dargestellte Kipp- oder Nachstelleinrichtung so eingestellt und angepresst werden, dass die vorgesehene Anpresskraft erreicht wird, also die Obermesser in Form der Messerklingen 3 an den Gegenelementen angepresst werden. Die kegelförmige Spitze der Lagerkappe 9 mit der stirnseitigen Oberfläche 18 kann auch nach Art eines Kegelstumpfs ausgebildet sein, da achsnahe Flächenbereiche ohnehin klein sind und damit zur Abstützung wenig beitragen.

Bei der Ausführungsform gemäß Fig. 1 sind die betreffende Messerklinge 3, der Haltebolzen 8 und die Lagerkappe 9 zu einem Verbundbauteil durch Nietung zusammengefügt, wobei es insbesondere darauf ankommt, dass die Lagerkappe 8 drehfest auf der Messerklinge 3 sitzt. Die Lagerkappe 9 stellt das eigentliche Verschleißteil dar und wird aus hochverschleißfestem Werkzeugstahl gefertigt, der auf einen Maximalwert von ca. 62 HRc voll durchgehärtet ist. Hierdurch steht für die gesamte nutzbare Zeit bzw. Lebensdauer eine Verschleißschicht mit gleich bleibend hoher Härte zur Verfügung. Die Härte nimmt also mit zunehmendem Verschleiß nicht ab. Hierdurch wird der radial und axial auftretende Verschleiß zwischen Lagerkappe 9 und Mitnehmerhülse 10 im Vergleich zum Stand der Technik deutlich verringert, so dass die Elemente des Schwenklagers 6 eine Lebensdauer bekommen, die zumindest derjenigen der Messerklinge 3 entspricht.

Die Herstellung der Nietverbindung zwischen Messerklinge 3, Haltebolzen 8 und Lagerkappe 9 wird anhand der **Fig. 2** verdeutlicht. Die Messerklinge 3 weist an der vorgesehenen Stelle den hochgeprägten Bereich 12 auf, in welchem die Durchbrechung 11 mit der angesenkten Fläche 13 vorgesehen ist. Der Haltebolzen 8 besteht aus einem zylinderförmigen Stift mit einer Spitze 22, die hier kegelstumpfförmig ausgebildet bzw. gestaltet ist. Der Durchmesser des zylindrischen Haltebolzens 8 ist so gewählt, dass er kleiner als der Durchmesser der Durchbrechung 11 und auch kleiner als der Durchmesser der Bohrung 14 der Lagerkappe 9 ist. Die Bohrung 14 kann an ihrem Ende eine kegelartige Gestaltung 23 aufweisen, wobei der Winkel dieses Kegels mit demjenigen der Spitze 22 des Haltebolzens 8 übereinstimmen kann. Durch diese gegenseitige Abstimmung lässt sich der Haltebolzen 8 als Rohling durch die Durchbrechung 11 der Messerklinge 3 hindurchstecken. Dabei wird von oben gleichzeitig die Lagerkappe 9 aufgesetzt. In entsprechend gehaltenem Zustand, der durch ein entsprechend ausgebildetes Nietwerkzeug erreicht wird, wird nun eine Axialkraft auf den Haltebolzen 8 zur Anwendung gebracht, bis dieser unter Fließdruck gerät und den Innenraum der Bohrung 14 sowie der Durchbrechung 11 bis hin zur Fläche 13 vollkommen ausfüllt. Es entsteht dann eine Formgebung, wie sie etwa in Fig. 3 dargestellt ist. Um die beim Fließpressen erheblichen Kräfte aufzunehmen und ein Aufplatzen der Lagerkappe 9 während des Nietvorgangs zu verhindern, kann die Lagerkappe 9 mit einem vorstehenden ringförmig verlaufenden Bund 24 versehen sein. Dieser Bund 24 erfüllt eine Vielfachfunktion, wie später noch erläutert wird. Der Bund 24 kann aber auch fehlen, wie die Ausführungsbeispiele der Fig. 1 und 3 zeigen.

Im Gegensatz zu der Ausführungsform der Fig. 1 zeigt die Ausführungsform der Fig. 2 und 3 eine Lagerkappe 9, bei der die mantelförmige Oberfläche 17 und die stirnseitige Oberfläche 18, die zusammen die Kontaktfläche 16 zu der Mitnehmerhülse 10 bilden, jeweils ballig ausgebildet sind. Die jeweils zugeordnete mantelförmige Oberfläche 20 und die grundseitige Oberfläche 21, die zusammen die Kontaktfläche 19 zu der Lagerkappe 9 bilden, sind als ebene Flächen ausgebildet.

Aus der vorstehenden Beschreibung geht bereits hervor, dass der Haltebolzen 8 aus einem gut verformbaren, also nietbaren Material geringer Festigkeit besteht. An dem Haltebolzen 8 findet keinerlei Relativbewegung statt, so dass er einem entsprechenden Verschleiß nicht unterworfen ist. Andererseits wird es durch die Zweiteiligkeit des Mitnehmerbolzens möglich, die Lagerkappe 9 aus voll durchhärtbarem Material, insbesondere aus einem Werkzeugstahl, herzustellen, der mit hoher Härte durchgehärtet ist, so dass er auch bei eintretendem Verschleiß seine Härte nicht verliert.

Als Material für die Mitnehmerhülse 10 können unterschiedliche Materialien eingesetzt werden. Wenn man an der Mitnehmerhülse 10 einen erhöhten Verschleiß zulassen möchte, besteht die Möglichkeit, einen gut nietbaren Werkstoff zu verwenden, um die Verbindung mit dem Führungsarm 5 über einen Niet 15 (Fig. 1) zu erreichen. Dabei ist es möglich, die Oberfläche der Mitnehmerhülse 10 zu härten und durch besondere Maßnahmen sicherzustellen, dass die Nietverbindung möglich ist. Es ist aber auch denkbar, die Verbindung zwischen Mitnehmerhülse 10 und Führungsarm 5 durch eine Schraubverbindung herbeizuführen, wie dies Fig. 3 zeigt.

Die in **Fig. 4** verdeutlichte Ausführungsform stimmt in weiten Bereichen mit vorangehend beschriebenen Ausführungsformen überein, weshalb auf die dortige Beschreibung verwiesen werden kann. Die Ausführungsform der Fig. 4 weist jedoch verschiedene Besonderheiten auf. So ist hier abweichend von vorangehenden Ausführungsformen die stirnseitige Oberfläche 18 der Kontaktfläche 16 der Lagerkappe 9 zwar ballig, aber im Gegensatz zu einer kegelförmigen Fläche flach ausgebildet, so dass sie sich im Wesentlichen senkrecht zu der Achse 7 erstreckt. Die mantelförmige Oberfläche 17 der Kontaktfläche 16 ist ballig ausgeführt, wie dies anhand der Fig. 2 und 3 bereits erläutert wurde. Es versteht sich, dass die entsprechende Gegenfläche an der Mitnehmerhülse 10 darauf abgestimmt ist. Insoweit ist die grundseitige Oberfläche 21 der Kontaktfläche 19 der Mitnehmerhülse 10 als ebene Fläche ausgebildet, die senkrecht zu der Achse 7 angeordnet ist.

Eine weitere Besonderheit besteht darin, dass bei dieser Ausführungsform der Bund 24, der auch bereits an dem Ausführungsbeispiel der Fig. 2 aufscheint, am unteren Ende der Lagerkappe 9 vorgesehen ist. Der Außendurchmesser des Bundes 24 kann mit dem Außendurchmesser der Mitnehmerhülse 10 übereinstimmen oder geringfügig kleiner ausgebildet sein. Durch den Bund 24 wird eine kreisringförmige Abstützfläche 25 geschaffen, die einer kreisringförmigen Gegenfläche 26 am unteren stirnseitigen Ende der Mitnehmerhülse 10 gegenüberliegt. Im Neuzustand der Teile, also ohne eingetretenen Verschleiß, ist die Dimensionierung der Lagerkappe 9 und der Mitnehmerhülse 10 so aufeinander abgestimmt, dass zwischen Abstützfläche 25 und Gegenfläche 26 ein Spalt 27 auftritt. Dieser Spalt 27 verkleinert sich während des Einsatzes des Schneidwerks 1 bei auftretendem Axialverschleiß an den Oberflächen 18 und 21. Der Spalt 27 bzw. die zugehörige Gestaltung der Lagerkappe 9 und der Mitnehmerhülse 10 kann in verschiedener Weise genutzt werden. Einerseits kann der Spalt 27 relativ groß gestaltet sein, so dass das Abnehmen des Spalts 27 dem Benutzer von außen sichtbar den fortschreitenden Axialverschleiß anzeigt. Dies kann als Anzeige gewertet werden, die nachlassende Anpresskraft über den Führungsarm 5 neu einzustellen bzw. nachzujustieren. Das völlige Verschwinden des Spalts 27 kann für den Benutzer ein Zeichen sein, entweder sämtliche Teile des Schwenklagers 6 oder auch nur beispielsweise die Mitnehmerhülsen 10 auszutauschen, an denen der wesentliche Axialverschleiß stattgefunden hat.

Schließlich ist eine Nutzungsmöglichkeit des Spalts 27 derart gegeben, dass der Spalt 27 von Anfang an bewusst klein dimensioniert wird, um die Elemente des Schwenklagers 6 an dem Schneidwerk 1 auch dann zu nutzen, wenn die Gegenfläche 26 auf der Abstützfläche 25 völlig aufsitzt, also der Spalt 27 verschwunden ist. Es tritt dann praktisch eine zweite Zeitdauer ein, in der das Schwenklager 6 weiterhin benutzt werden kann. Die Abstützfunktion der Oberflächen 18 und 21 wird durch die Abstützfunktion der Flächen 25 und 26 ergänzt. Es handelt sich um beachtliche Zusatzflächen, da hinzutretende Kreisringflächen auf relativ großem Durchmesser relativ groß sind. Es ist durchaus möglich, die Flächen 25 und 26 ähnlich groß zu gestalten, wie die Flächen 18 und 21. Bei einer solchen vorteilhaften Nutzung wird der Axialverschleiß dann fortlaufend auch an den Flächen 25 und 26 stattfinden, wodurch der Verschleiß in vertikaler Richtung vergleichsweise langsamer abläuft, d. h. das Maß der Annäherung zwischen Mitnehmerhülse 10 und Lagerkappe 9 in diesem zweiten Teil der Nutzungsdauer zeitlich langsamer durchlaufen wird. Das völlige Abarbeiten des Bunds 24 kann dann ein Maß für das Erreichen der End-Lebensdauer der Elemente des Schwenklagers 6 sein.

Fig. 4 zeigt aber auch noch eine dritte Besonderheit. In die Schraubbefestigung der Mitnehmerhülse 10 an dem Führungsarm 5 ist eine Unterlegscheibe 28 eingeschaltet. Diese Unterlegscheibe 28 ist im Neuzustand des Schneidwerks 1 oberhalb des Führungsarms 5 angeordnet. Die Unterlegscheibe 28 verbleibt oberhalb des Führungsarms 5 in einem ersten Verstellbereich, in welchem die Anpresskraft des Führungsarms 5 in axialer Richtung auf die Elemente des Schwenklagers 6 und damit letztendlich auf die Messerklingen 3 nachjustiert wird. Ist dieser Nachstellbereich erschöpft, so kann die Unterlegscheibe 28 unterhalb des Führungsarms 5 montiert werden, also zwischen der Unterseite des Führungsarms 5 und der Oberseite der Mitnehmerhülse 10. Damit kann ein zweiter Nachstellbereich zum Nachjustieren der axialen Anpresskraft auf die Messerklingen 3 geschaffen werden. Es versteht sich, dass die eigentliche Nachstelleinrichtung hier nicht näher dargestellt ist.

Die anhand der Fig. 4 beschriebenen Besonderheiten können jeweils einzeln oder auch in Kombination miteinander bei sämtlichen Ausführungsformen eingesetzt und angewandt werden. Die Fig. 5 bis 8 verdeutlichen ein Ausführungsbeispiel für eine formschlüssige drehfeste Nietverbindung zwischen Messerklinge 3 und Haltebolzen 8. **Fig. 5** zeigt eine Ansicht der Messerklinge 3 von unten, die in besonderer Weise für die Aufnahme eines Schwenklagers 6 ausgebildet ist. Die Messerklinge 3 weist einen hochgeprägten Bereich 12 auf, wie er beispielsweise auch aus den Fig. 1, 3 und 4 hervorgeht. Innerhalb dieses Bereichs 12 befindet sich die Durchbrechung 11, die die Messerklinge 3 durchsetzt. Die Durchbrechung 11 setzt sich im Einzelnen aus einem Bohrungsabschnitt 30 (Fig. 6) und einer unrund gestalteten Fläche 29 zusammen. Die unrunde Fläche 29 weist drei Flächenbereiche 31 (Fig. 5) auf, die ähnlich gestaltet sind wie eine in normaler Weise gefaste Bohrung bzw. als Restflächen einer solchen Fasung angesehen werden können. Zwischen diesen drei Flächenbereichen 31 befinden sich erhabene Flächenbereiche 32, also Flächenbereiche, an denen die Messerklinge 3 vergleichsweise tief geprägt ist. Zwischen den Flächenbereichen 31 und 32 ergeben sich verschiedene Übergangslinien. **Fig. 6** zeigt nur die Darstellung der Verschneidungslinien in der Schnittebene, nicht dagegen die an sich zugehörige Ansicht, um die Zeichnung Fig. 6 übersichtlich und einfach erkennbar zu halten. Damit ist erkennbar, dass die Flächenbereiche 31 und 32 die unrunde Fläche 29 der Durchbrechung 11 bilden. Es versteht sich, dass die unrunde Flächenausbildung nicht nur auf den Bereich der kegelförmig verlaufenden Fläche 13 beschränkt sein kann, wie es das Ausführungsbeispiel der Fig. 5 bis 8 zeigt. Es besteht auch die Möglichkeit, die unrunde Ausbildung über die gesamte Höhe der Messerklinge 3 zu verwirklichen, um die Fläche, die den Formschluss erbringt, möglichst groß zu gestalten.

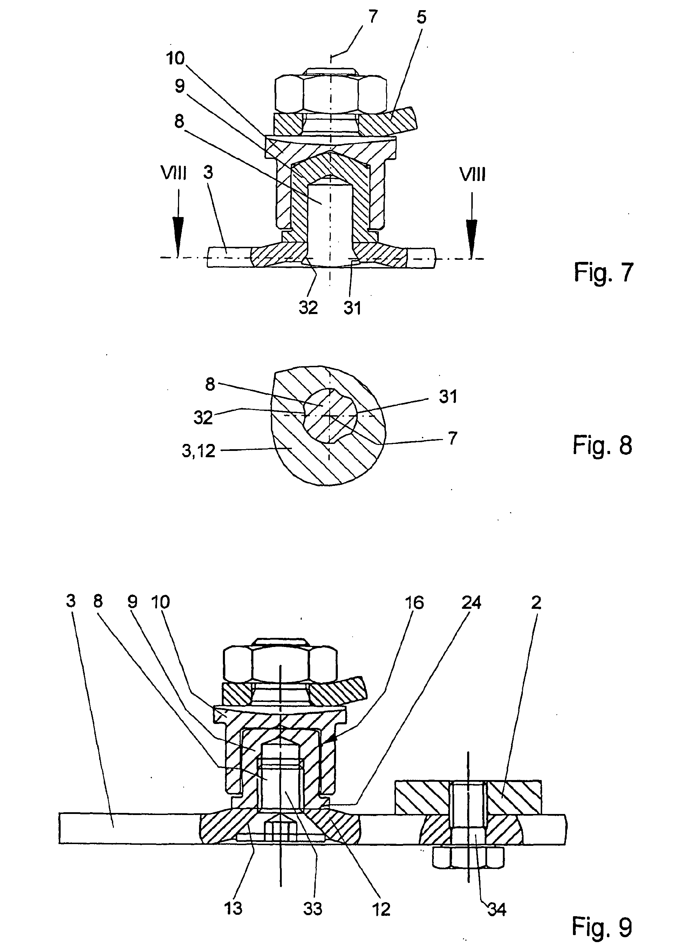

Die **Fig. 7 und 8** zeigen den eingesetzten und vernieteten Haltebolzen 8, wie er durch die formschlüssige Nietverbindung gehalten ist und damit auch für eine drehfeste Anordnung auf der Messerklinge 3 genutzt wird. Insbesondere aus Fig. 8 ist erkennbar, wie sich das Material des Haltebolzens 8 durch das Fließpressen bei der Nietung an die Flächenbereiche 31 und 32 der unrunden Fläche 29 angelegt hat.

**Fig. 9** zeigt schließlich eine weitere Ausführungsform des Schwenklagers, bei welchem die Lagerkappe 9 an der Messerklinge 3 nicht durch eine Vernietung, sondern durch eine Schraube 33 gehalten ist, die damit gleichzeitig die Funktion des Haltebolzens 8 erbringt. Es versteht sich, dass bei dieser Ausführungsform eine unrund gestaltete Fläche 29 nicht zur Anwendung gelangen kann. Die Befestigung der Lagerkappe 9 mit einer Schraube 33 ist insbesondere für vergleichsweise dicke Messerklingen 3 denkbar und möglich, etwa von einer Dicke von 4 mm aufwärts. Gleichzeitig oder unabhängig davon kann eine solche Messerklinge 3 an der Schiene 2 ebenfalls unter Einsatz einer Schraube 34 befestigt werden. Es versteht sich, dass auch bei dieser Ausführungsform die übrigen Merkmale der anderen Ausführungsformen weitgehend kombiniert angewendet werden können, beispielsweise die zylindrische oder die ballige Gestaltung der Kontaktfläche 16 sowie die Ausbildung der Kontaktfläche 19. Auch diese Ausführungsform kann mit und ohne Bund 24 an der Lagerkappe 9 verwirklicht werden.

### BEZUGSZEICHENLISTE

- 1: Schneidwerk
- 2: Schiene
- 3: Messerklinge
- 4: Niet
- 5: Führungsarm
- 6: Schwenklager
- 7: Achse
- 8: Haltebolzen
- 9: Lagerkappe
- 10: Mitnehmerhülse
- 11: Durchbrechung
- 12: Bereich
- 13: Fläche
- 14: Bohrung
- 15: Niet
- 16: Kontaktfläche
- 17: mantelförmige Oberfläche
- 18: stirnseitige Oberfläche
- 19: Kontaktfläche
- 20: mantelförmige Oberfläche
- 21: grundseitige Oberfläche
- 22: Spitze
- 23: Gestaltung
- 24: Bund
- 25: Abstützfläche
- 26: Gegenfläche
- 27: Spalt
- 28: Unterlegscheibe
- 29: unrunde Fläche
- 30: Bohrungsabschnitt
- 31: Flächenbereich
- 32: Flächenbereich
- 33: Schraube
- 34: Schraube

## Patentansprüche

1. Schneidwerk (1) für Schnittgut, mit zwei mit Schneidelementen besetzten Schienen (2), von denen zumindest eine hin- und hergehend angetrieben und mit Messerklingen (3) besetzt ist, wobei die die Messerklingen (3) tragende Schiene (2) über eine Anzahl Führungsarme (5) geführt ist, an deren vorderen Enden je ein Schwenklager (6) mit etwa vertikal angeordneter Achse (7) vorgesehen ist, das einen auf einer Messerklinge (3) angeordneten Mitnehmerzapfen (8, 9) und eine auf dem Führungsarm (5) angeordnete Mitnehmerhülse (10) aufweist, **dadurch gekennzeichnet, dass** der Mitnehmerzapfen (8, 9) in mindestens zwei Elemente unterteilt ist und einen Haltebolzen (8) und eine Lagerkappe (9) aufweist, wobei der Haltebolzen (8) die Messerklinge (3) durchsetzt und die Lagerkappe (9) drehfest mit der Messerklinge (3) verbindet.

2. Schneidwerk nach Anspruch 1, **dadurch gekennzeichnet, dass** die Lagerkappe (9) aus einem voll durchhärtbaren verschleißarmen Werkstoff besteht.

3. Schneidwerk nach Anspruch 1 oder 2, **dadurch gekennzeichnet, dass** der Haltebolzen (8) aus einem nietbaren Werkstoff besteht.

4. Schneidwerk nach mindestens einem der Ansprüche 1 bis 3, **dadurch gekennzeichnet, dass** die Mitnehmerhülse (10) an dem Führungsarm (5) lösbar befestigt ist.

5. Schneidwerk nach mindestens einem der Ansprüche 1 bis 4, **dadurch gekennzeichnet, dass** die Lagerkappe (9) eine mantelförmige Oberfläche (17) und eine stirnseitige Oberfläche (18) aufweist, die zusammen eine Kontaktfläche (16) zu der Mitnehmerhülse (10) bilden.

6. Schneidwerk nach Anspruch 5, **dadurch gekennzeichnet, dass** die mantelförmige und/oder die stirnseitige Oberfläche (17, 18) der Lagerkappe (9) ballig ausgebildet ist.

7. Schneidwerk nach mindestens einem der Ansprüche 5 und 6, **dadurch gekennzeichnet, dass** die stirnseitige Oberfläche (18) der Lagerkappe (9) und eine entsprechende grundseitige Oberfläche (21) der Mitnehmerhülse (10) im Wesentlichen senkrecht zu der Achse (7) des Schwenklagers (6) angeordnet sind.

8. Schneidwerk nach mindestens einem der Ansprüche 1 bis 7, **dadurch gekennzeichnet, dass** die Lagerkappe (9) an ihrem der Messerklinge (3) zugekehrten Ende einen radial vorstehenden ringförmigen Bund (24) aufweist.

9. Schneidwerk nach mindestens einem der Ansprüche 1 bis 8, **dadurch gekennzeichnet, dass** die Messerklinge (3) an der Durchdringungsstelle des Haltebolzens (8) eine zumindest teilweise unrund gestaltete Fläche (29) aufweist, die in Verbindung mit dem eingenieteten Haltebolzen (8) eine formschlüssige drehfeste Verbindung ergibt.

10. Schneidwerk nach mindestens einem der Ansprüche 1 bis 9, **dadurch gekennzeichnet, dass** die Mitnehmerhülse (10) an dem Führungsarm (5) über eine Schraubverbindung lösbar befestigt ist und die Schraubverbindung eine Distanzscheibe (28) aufweist.

## Claims

1. A cutting tool (1) for material to be cut, including two bars (2) on which cutting elements are arranged, at least one of the bars (2) being driven to reciprocate and including knife blades (3), the bar (2) including the knife blades (3) being guided by a number of guiding arms (5), a pivot bearing (6) being arranged at the front ends of each of the guiding arms (5), each of the pivot bearings (6) having an axis (7) being arranged to be approximately vertical, each of the pivot bearings (6) including a tappet (8, 9) being arranged on the knife blade (3) and a driving bush (10) being arranged on the guiding arm (5), **characterized in that** the tappet (8, 9) is divided into at least two elements and includes a retaining bolt (8) and a bearing cap (9), the retaining bolt (8) extending through the knife blade (3) and fixedly connecting the bearing cap (9) and the knife blade (3) in a commonly rotatable manner ("drehfest").

2. The cutting tool of claim 1, **characterized in that** the bearing cap (9) is made of a material that is full-hardenable and wear resistant.

3. The cutting tool of claim 1 or 2, **characterized in that** the retaining bolt (8) is made of a material that can be riveted.

4. The cutting tool of at least one of claims 1 to 3, **characterized in that** the driving bush (10) is detachably connected to the guiding arm (5).

5. The cutting tool of at least one of claims 1 to 4, **characterized in that** the bearing cap (9) includes a lateral surface (17) and a front surface (18) commonly forming a contact surface (16) with respect to the driving bush (10).

6. The cutting tool of claim 5, **characterized in that** the lateral and/or the front surface (17, 18) of the bearing cap (9) are/is designed to be crowned.

7. The cutting tool of at least one of claims 5 or 6, **characterized in that** the front surface (18) of the bearing cap (9) and a respective base surface (21) of the driving bush (10) are arranged to be substantially perpendicular with respect to the axis (7) of the pivot bearing (6).

8. The cutting tool of at least one of claims 1 to 7, **characterized in that** the bearing cap (9) at its end facing the knife blade (3) includes an annular flange (24) protruding in a radial direction.

9. The cutting tool of at least one of claims 1 to 8, **characterized in that** the knife blade (3) at the passage location of the retaining bolt (8) includes a surface (29) at least partly being designed not to be round, the surface (29) in combination with the riveted retaining bolt (8) forming the positively engaged commonly rotatable connection.

10. The cutting tool of at least one of claims 1 to 9, **characterized in that** the driving bush (10) is detachably connected to the guiding arm (5) by a screw connection and the screw connection includes a distance plate (28).

## Revendications

1. Barre de coupe (1) pour produit à découper, comprenant deux rails (2) équipés d'éléments de coupe, dont au moins l'un est entraîné dans un mouvement de va-et-vient et est doté de lames de couteau (3), le rail (2) portant les lames de couteau (3) étant guidé au moyen d'un certain nombre de bras de guidage (5), bras sur les extrémités avant desquels est prévu à chaque fois un palier pivotant (6) avec un axe (7) disposé à peu près verticalement, qui présente un tenon entraîneur (8, 9) disposé sur une lame de couteau (3) et un manchon entraîneur (10) disposé sur le bras de guidage (5), **caractérisée en ce que** le tenon entraîneur (8, 9) est subdivisé en au moins deux éléments et présente un boulon de retenue (8) et un chapeau de palier (9), le boulon de retenue (8) traversant la lame de couteau (3) et reliant le chapeau de palier (9) de façon solidaire en rotation à la lame de couteau (3).

2. Barre de coupe selon la revendication 1, **caractérisée en ce que** le chapeau de palier (9) est à base d'un matériau pouvant être trempé à coeur et peu sujet à l'usure.

3. Barre de coupe selon la revendication 1 ou 2, **caractérisée en ce que** le boulon de retenue (8) est à base d'un matériau pouvant être riveté.

4. Barre de coupe selon au moins l'une quelconque des revendications 1 à 3, **caractérisée en ce que** le manchon entraîneur (10) est fixé de façon amovible sur le bras de guidage (5).

5. Barre de coupe selon au moins l'une quelconque des revendications 1 à 4, **caractérisée en ce que** le chapeau de palier (9) présente une surface (17) en forme d'enveloppe et une surface (18) côté avant, qui forment ensemble une surface de contact (16) avec le manchon entraîneur (10).

6. Barre de coupe selon la revendication 5, **caractérisée en ce que** la surface (17) en forme d'enveloppe et/ou la surface (18) côté avant du chapeau de palier (9) est/sont conçue(s) bombée(s).

7. Barre de coupe selon au moins l'une quelconque des revendications 5 et 6, **caractérisée en ce que** la surface (18) côté avant du chapeau de palier (9) et une surface (21) côté base correspondante du manchon entraîneur (10) sont disposées principalement perpendiculairement à l'axe (7) du palier pivotant (6).

8. Barre de coupe selon au moins l'une quelconque des revendications 1 à 7, **caractérisée en ce que** le chapeau de palier (9) présente sur son extrémité tournée vers la lame de couteau (3) une collerette (24) dépassant radialement et de forme annulaire.

9. Barre de coupe selon au moins l'une quelconque des revendications 1 à 8, **caractérisée en ce que** la lame de couteau (3) présente au point de pénétration du boulon de retenue (8) une surface (29) conçue au moins en partie ovale, qui donne en liaison avec le boulon de retenue (8) riveté à l'intérieur une liaison mécanique solidaire en rotation.

10. Barre de coupe selon au moins l'une quelconque des revendications 1 à 9, **caractérisée en ce que** le manchon entraîneur (10) est fixé de façon amovible sur le bras de guidage (5) au moyen d'un assemblage vissé et l'assemblage vissé présente une rondelle d'écartement (28).
